(19) Europäisches Patentamt
European Patent Office
Office européen des brevets

(11) EP 2 070 954 A1

(12) EUROPEAN PATENT APPLICATION

(43) Date of publication:
**17.06.2009 Bulletin 2009/25**

(51) Int Cl.:
***C08F 10/06*** *(2006.01)* ***C08F 4/651*** *(2006.01)*

(21) Application number: **07150038.3**

(22) Date of filing: **14.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **TOTAL PETROCHEMICALS RESEARCH FELUY**
**7181 Seneffe (Feluy) (BE)**

(72) Inventors:
- **Standaert, Alain**
  **1020, Bruxelles (BE)**
- **Gromada, Jérôme**
  **5380, Marchovelette (BE)**

# (54) Process for the production of a propylene polymer having a broad molecular weight distribution and a low ash content

(57) The present invention relates to a process for the production of propylene homo- and copolymers having a broad molecular weight distribution and a low ash content, with "ash" denoting aluminium as well as residues of catalyst, cocatalyst or any additive, such as titanium (Ti) or silicium (Si) derivatives, used in the production of propylene polymers. The propylene polymers of the present invention are useful to make films, such as capacitor films, as well as fibers and nonwovens, such as for example staple fibers, spunbond nonwovens, meltblown nonwovens.

EP 2 070 954 A1

## Description

## Field of the invention

The present invention relates to a process for the production of propylene homo- and copolymers having a broad molecular weight distribution and a low ash content, with "ash" denoting aluminium as well as residues of catalyst, cocatalyst or any additive, such as titanium (Ti) or silicium (Si) derivatives, used in the production of propylene polymers. The propylene polymers of the present invention are useful to make films, such as capacitor films, as well as fibers and nonwovens, such as for example staple fibers, spunbond nonwovens, meltblown nonwovens.

## The technical problem and the prior art

Propylene homo- and copolymers are produced in the presence of

(a) a Ziegler-Natta catalyst comprising a titanium compound, which has at least one titanium-halogen bond, and an internal electron donor, both supported on a magnesium halide in active form,
(b) an organoaluminium compound, such as an aluminium alkyl compound, and
(c) an optional external electron donor (ED).

As internal electron donors, mention may be made of compounds selected from the group consisting of ethers, ketones, lactones, compounds containing N, P and/or S atoms, and esters of mono- and dicarboxylic acids. Particularly suitable internal electron donors are succinates, diethers, such as 1,3-diethers, and phthalic acid esters, such as diethyl, diisobutyl, di-n-butyl, dioctyl, diphenyl and benzylbutyl phthalate.

As the Ziegler-Natta catalyst, the organoaluminium compound and the optional external electron donor (ED) are not removed after the polymerization but rather left in the polymer, propylene polymers comprise residues of the catalytic system, such as Al, Ti, Mg and Cl. The total of these residues is called "ash".

High levels of ash in a propylene polymer may lead to plate-out and in consequence necessitate frequent cleaning of down-stream processing equipment, for example of a film or sheet extrusion line or of a fiber or nonwoven production line. In order to reduce the ash content the propylene polymer may be washed. However, such a washing process is energy intensive, as the polymer needs to be dried afterwards, and therefore also expensive.

EP-A-0 449 302 discloses a process for the production of polypropylene with less than 15 ppm of ash content. Such a polypropylene is for example particularly suitable for use in capacitor films. In said process, the catalyst is a Ziegler-Natta catalyst, the internal electron donor is 2-isopropyl-2-isoamyl-1,3-dimethoxypropane or 2-cyclohexyl-2-isopropyl-1,3-dimethoxypropane and the organoaluminium compound is Al-triisobutyl. There is no external electron donor. Operating conditions are as follows:

- the molar ratio Al/Ti is 30,
- the average residence time is 6 hours,
- polymerization is carried out at 70°C in liquid propylene in a 950 l loop reactor,
- propylene feed is 88.5 kg/h,
- polypropylene production is 46 kg/h, and
- the yield is 150 kg of polypropylene per g of catalyst, corresponding to 25 kg /g catalyst /h.

The resulting Al residue in the polypropylene is between 4.5 and 4.8 ppm. Due to the low yield and low productivity this process is not of commercial interest anymore.

Polypropylenes having a low ash content are of interest in applications requiring very clean propylene polymers, for example as dielectric material in capacitors. The capacity C of an electric plate capacitor is defined as

$$C = \varepsilon \cdot A \cdot d^{-1} \qquad \text{(eq. 1)}$$

with ε being the dielectric constant, which is determined by the material, A being the area of the conductive plates, and d being the distance between the conductive plates. In principle, the distance d between the conductive plates corresponds to the thickness of the dielectric material that may be selected in accordance with e.g. applied voltage and desired lifetime of the capacitor. In order to compensate for any faults in the dielectric material, such as a polypropylene film, one either has to use a film that is thicker than is necessary under eq. 1 or one has to use a number a thinner films on top of each other.

Capacitor manufacturers have a strong interest in reducing the distance d between the conductive plates in

order to reduce the costs as well as the sizes of the capacitors; in other words the capacitor manufacturers are interested in having for example very thin polypropylene film. For these to be processable and at the same time to comply with the requirements for use in capacitors such polypropylene films need to have improved mechanical properties in combination with a low total ash content.

It is therefore an object of the present invention to provide propylene polymers that fulfill these requirements.

In particular, it is an object of the present invention to provide propylene polymers characterized by improved mechanical properties and a low ash content.

Further, it is an object of the present invention to provide propylene polymers characterized by improved processability.

Furthermore, it is an object of the present invention to provide propylene polymers characterized by improved mechanical properties, a low ash content and improved processability.

**Brief description of the invention**

We have now discovered a polymerization process that allows the production of propylene polymers which fulfill at least one of the above objectives.

Thus, the present invention provides a process for the production of propylene polymers having a broad molecular weight distribution and a low ash content by polymerization of propylene and one or more optional comonomers in presence of

(a) a Ziegler-Natta catalyst comprising a titanium compound having at least one titanium-halogen bond, and an internal electron donor, both supported on a magnesium halide in active form,
(b) triethyl aluminium, and
(c) an optional external electron donor (ED),

wherein the internal donor comprises at least 80 wt% of a compound selected from the group consisting of succinates, di-ketones and enamino-imines; wherein the molar ratio Al/Ti is at most 40; and wherein the propylene polymers are recovered from the polymerization reactor, without any washing, as a powder and optionally converted to pellets.

In addition, the present invention provides propylene polymers obtained by said process. Said propylene polymers are further characterized by a low ash content and a broad molecular weight distribution.

Further, the present invention provides films, fibers and nonwoven made with the propylene polymers produced by said process as well as the use of said films, fibers and nonwoven.

**Detailed description of the invention**

For the purpose of the present invention the term "ash" means aluminium as well as residues of catalyst, cocatalyst or any additive, such as Ti and Si derivatives, used in the production of propylene polymers.

For easier understanding the terms "succinate catalyst", "diether catalyst" and "phthalate catalyst" are used to denote a Ziegler-Natta catalyst with a succinate compound as internal electron donor, resp. a Ziegler-Natta catalyst with a diether compound as internal electron donor, resp. a Ziegler-Natta catalyst with a phthalate compound as internal electron donor.

For the purposes of the present invention the terms "propylene polymer" and "polypropylene" may be used interchangeably.

The propylene polymers of the present invention are homopolymers or random copolymers of propylene and one or more comonomers. Said one or more comonomers can be ethylene or a $C_4$-$C_{20}$ alpha-olefin, such as 1-butene, 1-pentene, 4-methyl-1-pentene, 1-hexene, 1-octene.

The random copolymers of the present invention comprise at least 0.1 wt%, preferably at least 0.2 wt%, and most preferably at least 0.5 wt% of comonomer(s). They comprise at most 2 wt% of comonomer(s). Preferably, the random copolymers are copolymers of propylene and ethylene.

The melt flow index of the propylene polymers of the present invention is in the range from 1 to 2000 dg/min as measured according to ISO 1133, condition L, at 230°C with a load of 2.16 kg. If used for films the propylene polymers of the present invention preferably have a melt flow index in the range from 1 to 10 dg/min, more preferably in the range from 1 to 4 dg/min and most preferably in the range from 1.5 to 4 dg/min. When used in fiber and nonwoven applications the propylene polymers of the present invention have a melt flow index in the range from 5 dg/min to 2000 dg/min (as measured according to ISO 1133, condition L, at 230°C under 2.16 kg). When used for fiber spinning the melt flow of the propylene polymers is in the range from 5 dg/min to 40 dg/min. When used in the spunbonding process the melt flow of the propylene polymers is at least 10 dg/min, preferably at least 15 dg/min, and most preferably at least 20 dg/min. When used in the spunbonding process the melt flow of the propylene polymers is at most 300 dg/min, preferably at

most 200 dg/min, more preferably at most 150 dg/min, even more preferably at most 100 dg/min and most preferably at most 60 dg/min. When used in the melt blown process the melt flow of the propylene polymers is at least 100 dg/min, preferably at least 150 dg/min, more preferably at least 200 dg/min, even more preferably at least 250 dg/min and most preferably at least 300 dg/min. When used in the melt blown process the melt flow of the propylene polymers is at most 2000 dg/min, preferably at most 1800 dg/min, more preferably at most 1600 dg/min, and most preferably at most 1400 dg/min.

The Ziegler-Natta catalyst comprises a titanium compound, which has at least one titanium-halogen bond, and an internal donor, both supported on magnesium halide in active form.

The internal donor used in the present invention is a succinate, a di-ketone, an enamino-imine or a blend of these, or a blend of these with a different internal donor, such as for example a phthalate or a diether, provided that such a mixture shows polymerization behavior comparable to a Ziegler-Natta catalyst with a succinate, a di-ketone, an enamino-imine, or a blend of these as internal donor. A mixture of internal donors could for example comprise a succinate and a phthalate or a mixture of a succinate and a diether. The preferred internal donor is a succinate or a mixture of a succinate and a phthalate.

Alternatively to a Ziegler-Natta catalyst comprising a mixture of internal donors as described above it is also possible to employ a mixture of a Ziegler-Natta catalyst with a succinate, a di-ketone, an enamino-imine, or a blend of these as internal donor, and a Ziegler-Natta catalyst with a different internal donor. For example, it is possible to employ a mixture of a succinate catalyst and a diether catalyst or a mixture of a succinate and a phthalate catalyst.

Independently of whether one Ziegler-Natta catalyst with a mixture of internal donors or a mixture of Ziegler-Natta catalysts, each with a different electron donor, is used, the internal donors selected from the group consisting of succinates, di-ketones or enamino-imines comprise at least 80 wt%, preferably at least 90 wt%, more preferably at least 95 wt% and even more preferably at least 99 wt% of the total weight of the internal donor. It is, however, preferred that the internal donor is a succinate, an enamino-imine or a di-ketone. It is most preferred that the internal donor essentially consists of a succinate.

Ziegler-Natta catalysts comprising a succinate, a di-ketone or an enamino-imine as internal donor can for example be obtained by reaction of an anhydrous magnesium halide with an alcohol, followed by titanation with a titanium halide and reaction with the respective succinate, di-ketone or enamino-imine compound as internal donor. Such a catalyst comprises about 2 - 6 wt% of titanium, about 10 - 20 wt% of magnesium and about 5 - 30 wt% of internal donor with chlorine and solvent making up the remainder.

Suitable succinate compounds have the formula

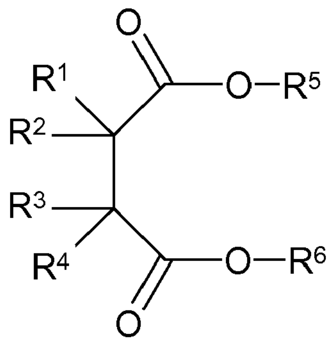

wherein $R^1$ to $R^4$ are equal to or different from one another and are hydrogen, or a $C_1$-$C_{20}$ linear or branched alkyl, alkenyl, cycloalkyl, aryl, arylalkyl or alkylaryl group, optionally containing heteroatoms, and $R^1$ to $R^4$, being joined to the same carbon atom, can be linked together to form a cycle; and $R^5$ and $R^6$ are equal to or different from one another and are a linear or branched alkyl, alkenyl, cycloalkyl, aryl, arylalkyl or alkylaryl group, optionally containing heteroatoms.

Suitable di-ketones are 1,3-di-ketones of formula

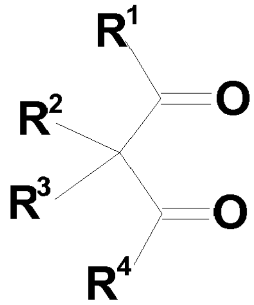

wherein $R^2$ and $R^3$ are equal to or different from one another and are hydrogen, or a C1-C20 linear or branched alkyl, alkenyl, cycloalkyl, aryl, arylalkyl or alkylaryl group, optionally containing heteroatoms, and $R^2$ and $R^3$, being joined to the same carbon atom, can be linked together to form a cycle; and $R^1$ and $R^4$ are equal to or different from one another and are a linear or branched alkyl, alkenyl, cycloalkyl, aryl, arylalkyl or alkylaryl group, optionally containing heteroatoms.

Suitable enamino-imines have the general formula

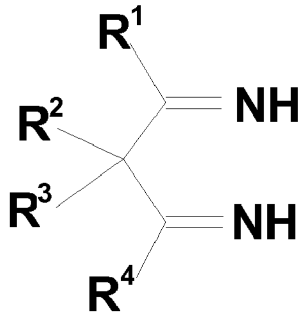

wherein $R^2$ and $R^3$ are equal to or different from one another and are hydrogen, or a C1-C20 linear or branched alkyl, alkenyl, cycloalkyl, aryl, arylalkyl or alkylaryl group, optionally containing heteroatoms, and $R^2$ and $R^3$, being joined to the same carbon atom, can be linked together to form a cycle; and $R^1$ and $R^4$ are equal to or different from one another and are a linear or branched alkyl, alkenyl, cycloalkyl, aryl, arylalkyl or alkylaryl group, optionally containing heteroatoms.

Suitable diethers are 1,3-diethers of formula

$$R^1R^2C(CH_2OR^3)(CH_2OR^4)$$

wherein $R^1$ and $R^2$ are the same or different and are $C_1$-$C_{18}$ alkyl, $C_3$-$C_{18}$ cycloalkyl or $C_7$-$C_{18}$ aryl radicals; $R^3$ and $R^4$ are the same or different and are $C_1$-$C_4$ alkyl radicals; or are the 1,3-diethers in which the carbon atom in position 2 belongs to a cyclic or polycyclic structure made up of 5, 6 or 7 carbon atoms and containing two or three unsaturations. Ethers of this type are disclosed in published European patent applications EP-A-0 361 493 and EP-A-0 728 769. Representative examples of said diethers are 2-methyl-2-isopropyl-1,3-dimethoxypropane; 2,2-diisobutyl-1,3-dimethoxypropane; 2-isopropyl-2-cyclopentyl-1,3-dimethoxypropane; 2-isopropyl-2-isoamyl-1,3-dimethoxypropane; 9,9-bis (methoxymethyl)fluorene.

Suitable phthalates are selected from the alkyl, cycloalkyl and aryl phthalates, such as for example diethyl phthalate, diisobutyl phthalate, di-n-butyl phthalate, dioctyl phthalate, diphenyl phthalate and benzylbutyl phthalate.

Ziegler-Natta catalysts comprising a succinate, a diether, a phthalate etc. as internal donor are commercially available for example from Basell under the Avant ZN trade name.

In the polymerization process of the present invention the external electron donor (ED) is optional. It is nevertheless preferred to perform the polymerization in presence of an external electron donor (ED). Suitable external electron donors (ED) include certain silanes, ethers, esters, amines, ketones, heterocyclic compounds and blends of these. It is preferred to use a 1,3-diether as described above or a silane. It is most preferred to use silanes of the general formula

$$R^a_pR^b_qSi(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently

from one another and can be the same or different. Specific examples of such silanes are (tert-butyl)$_2$Si($OCH_3$)$_2$, (cyclohexyl)(methyl) Si($OCH_3$)$_2$ (referred to as "C donor"), (phenyl)$_2$Si($OCH_3$)$_2$ and (cyclopentyl)$_2$ Si($OCH_3$)$_2$ (referred to as "D donor").

The organoaluminium compound used in the process of the present invention is triethyl aluminium (TEAL). Advantageously, the triethyl aluminium has a hydride content, expressed as $AlH_3$, of less than 1.0 wt% with respect to the triethyl aluminium. More preferably, the hydride content is less than 0.5 wt%, and most preferably the hydride content is less than 0.1 wt%. It would not depart from the scope of the invention if the organoaluminium compound contains minor amounts of other compounds of the trialkylaluminium family, such as triisobutyl aluminium, tri-n-butyl aluminium, and linear or cyclic alkyl aluminium compounds containing two or more Al atoms, provided they show polymerization behavior comparable to that of TEAL.

In the process of the present invention the molar ratio Al/Ti is at most 40, preferably it is in the range from 10 to 40, and more preferably it is in the range from 15 to 35.

If an external electron donor (ED) is present, the molar ratio Al/ED is at most 250, preferably it is in the range from 5 to 200.

Before being fed to the polymerization reactor the catalytic system preferably undergoes a premix and/or a pre-polymerization step. In the premix step, the triethyl aluminium (TEAL) and the external electron donor (ED) - if present -, which have been pre-contacted, are mixed with the Ziegler-Natta catalyst at a temperature in the range from 0°C to 30°C, preferably in the range from 5°C to 20°C, for up to 15 min. The mixture of TEAL, external electron donor and Ziegler-Natta catalyst is pre-polymerized with propylene at a temperature in the range from 10°C to 100°C, preferably in the range from 10°C to 30°C, for 1 to 30 min, preferably for 2 to 20 min.

The polymerization of propylene and one or more optional comonomers can be carried out according to known techniques. The polymerization can for example be carried out in liquid propylene as reaction medium. It can also be carried out in a diluent, such as a hydrocarbon that is inert under polymerization conditions (slurry polymerization). It can also be carried out in the gas phase.

For the present invention propylene homopolymers and random copolymers are preferably produced by polymerization in liquid propylene at temperatures in the range from 20°C to 100°C. Preferably, temperatures are in the range from 60°C to 80°C. The pressure can be atmospheric or higher. Preferably the pressure is between 25 and 50 bar.

Hydrogen is used to control the chain lengths of the propylene polymers. For the production of propylene polymers with higher MFI, i.e. with lower average molecular weight and shorter polymer chains, the concentration of hydrogen in the polymerization medium needs to be increased. Inversely, the hydrogen concentration in the polymerization medium has to be reduced in order to produce propylene polymers with lower MFI, i.e. with higher average molecular weight and longer polymer chains.

For the present invention the production of the propylene polymers can be carried out in one single polymerization reactor, which with the polymerization catalysts used in the present invention leads to a broader molecular weight distribution.

Alternatively, the production of the propylene polymers can be carried out in two or more sequential polymerization reactors, i.e. two or more polymerization reactors in series, wherein the propylene polymer produced in each of the two or more sequential polymerization reactors has a different average molecular weight In practice, the production of propylene polymers having different average molecular weight may be achieved by having different hydrogen concentrations in the polymerization media in each of the at least two polymerization reactors.

It is clear to the person skilled in the art that the production of the propylene polymers can be done for example in three, four or five sequential polymerization reactors. However, if more than one reactor is used, it is preferred that the production of propylene polymers is done in two sequential polymerization reactors, for which case it is preferred that the contribution of the first polymerization reactor is in the range from 35 wt% to 65wt% of the total weight of the propylene polymer. In the case of three sequential polymerization reactors it is preferred to have two sequential loop polymerization reactors followed by a gas-phase polymerization reactor.

The propylene polymers produced according to the present invention are characterized by a polydispersity index (PI) in the range from 6 to 9. The polydispersity index (PI) has first been described by Zeichner and Patel in the Proceedings of the 2nd World Congress of Chemical Engineering, Montreal, Canada, 6, 373 (1981). The polydispersity index (PI) is defined as

$$PI = 10^5\ Pa \cdot G_c^{-1} \qquad \text{(eq. 2)}$$

with $G_c$, which is expressed in Pa, being the modulus at the intersection of the storage modulus G' and loss modulus G", i.e. $G_c$ is the modulus when G' = G". In the literature this intersection is often called "the cross-over point" in the literature. Storage modulus G' and loss modulus G" can be obtained for a molten polymer sample from dynamic rheology

measurement.

Propylene, one or more optional comonomers and hydrogen are fed to the polymerization reactor or to each polymerization reactor if two or more polymerization reactors are used. When using two or more sequential polymerization reactors hydrogen is fed to the reactors at different hydrogen to propylene ratios, thus resulting in a different hydrogen concentration in each polymerization reactor. This again, in each reactor leads to the production of propylene having a different molecular weight. In this way, the molecular weight distribution (MWD) of the propylene polymer recovered from the last polymerization reactor is modified. Polymerization catalyst, triethyl aluminium (TEAL) and the optional external electron donor (ED), all of which may optionally have been premixed and/or pre-polymerized, are fed to the first of the sequential polymerization reactors only.

When two or more polymerization reactor are used sequentially the polymerization medium comprising the propylene polymer is withdrawn from the polymerization reactor using suitable means for withdrawal and is fed to the subsequent polymerization reactor. From the last of the sequential polymerization reactors, the propylene polymer is recovered without any washing as a powder and is optionally converted to pellets.

The residence time in each polymerization reactor is at most 2 hours, more preferably at most 1.5 hours, and most preferably at most 1.25 hours. The residence time in the polymerization reactor is at least 0.25 hours, preferably at least 0.5 hours, and most preferably at least 0.75 hours.

The productivity of the polymerization catalyst is equal to or higher than 20 kg of propylene polymer per g catalyst. Preferably, it is higher than 25 kg and, more preferably higher than 30 kg of propylene polymer per g catalyst.

The propylene polymers of the present invention are characterized by a low titanium content in combination with a low aluminium content.

The titanium content of the propylene polymers of the present invention is at most 2 ppm, preferably at most 1.5 ppm, more preferably at most 1.25 ppm and most preferably at most 1 ppm.

The propylene polymers of the present invention comprise at most 30 ppm of aluminium, preferably at most 25 ppm, more preferably at most 20 ppm and most preferably at most 15 ppm.

The propylene polymers of the present invention comprise at most 15 ppm of chlorine, preferably at most 12 ppm.

The propylene polymers of the present invention comprise at most 5 ppm of magnesium.

The propylene polymers of the present invention comprise a total ash content of at most 60 ppm, preferably of at most 55 ppm, more preferably of at most 50 ppm, and most preferably of at most 45 ppm.

The propylene polymers of the present invention are characterized by a xylene solubles content in the range from 2.0 wt% to 5.0 wt%. The xylene solubles content is dependent upon the Al/ED ratio, with ED denoting external electron donor. The Al/ED ratio can easily be modified to arrive at the desired xylene solubles content.

The propylene polymers of the present invention are characterized by very high isotacticity, for which the content of mmmm pentads is a measure. The content of mmmm pentads is in the range from 97.0 % to 99.0 %. The isotacticity is determined by NMR analysis according to the method described by G.J. Ray et al. in Macromolecules, vol. 10, n° 4, 1977, p. 773-778.

It has been surprisingly found that propylene polymers characterized by a xylene solubles content in the range from 2.0 wt% to 5.0 wt% can be produced with as good a productivity as for example the productivity obtained in a polymerization process using a higher TEAL/propylene ratio.

It has also been surprisingly found that the propylene polymers of the present invention are characterized by a good combination of processability and mechanical properties of the final articles, such as a films, fibers and nonwovens.

The propylene polymers of the present invention may contain additives such as, by way of example, antioxidants, light stabilizers, acid scavengers, lubricants, antistatic additives, nucleating/clarifying agents, colorants. An overview of such additives may be found in Plastics Additives Handbook, ed. H. Zweifel, 5th edition, 2001, Hanser Publishers.

The propylene polymers of the present invention are specifically suited for film applications, such as cast films, blown films, bioriented films. Such films in turn are well-suited for packaging applications. The propylene polymers of the present invention are particularly suited for capacitor films.

For use in film applications the preferred polymer is a homopolymer. Preferably it characterized by a melt flow in the range from 1 to 10 dg/min, preferably in the range from 1 to 4 dg/min and most preferably in the range from 1.5 to 4 dg/min. Further the preferred polymer for film applications is characterized by a xylene solubles fraction of at most 2.5 wt%, preferably of at most 2.2 wt%, more preferably of at most 2.1 wt% and most preferably of at most 2.0 wt%. Further it is characterized by low contents in chlorine, magnesium, aluminium, titanium and total ash as described before.

The propylene polymers of the present invention are specifically suited for fiber and nonwoven applications, such as staple fibers, spunbond nonwovens, meltblown nonwovens. Staple fibers in turn can be used for making thermal bonded nonwovens. Thermal bonded nonwovens and spunbond nonwovens can be used in hygiene applications, such as diapers or feminine hygiene articles, in construction applications or geotextiles; potentially in combination with one or more meltblown nonwovens. Meltblown nonwovens are particularly suited for filter applications.

For use in fiber and nonwoven applications the preferred propylene polymer is a homopolymer.

## Examples

The following examples show the advantages of the present invention. Propylene polymers according to the present invention as well as comparative propylene polymers were produced according to the following pilot plant polymerization procedure:

Triethyl aluminium (TEAL) as solution in hexane and di-cyclopentyl-dimethoxysilane (D donor) as solution in hexane were pre-contacted for about 1 min at room temperature, followed by addition of the polymerization catalyst in form of an oily slurry with 17 g of catalyst per liter of slurry. The resulting blend was mixed at room temperature for about 5 min and injected into a prepolymerization loop reactor, which was kept at a temperature of 15°C. The pre-polymerized catalytic system was then fed into the first of two serially connected 150 l loop reactors thermoregulated at given temperatures, to which also propylene and hydrogen in quantities sufficient to obtain the targeted MFIs were added continuously. The Al/Ti molar ratio was kept as close as possible around the value indicated in table 1. The propylene flow rate was regulated in such a way that the polymer concentration in the reactor was kept constant with the density of the polymer slurry in the reactor being higher than 0.40 kg/l. The average residence time in the reactors was from 70 to 90 minutes (In an industrial propylene polymerization plant the residence time would be shorter than this.).

The polymerization catalyst Avant ZN168 used herein is commercially available from Basell. Avant ZN168 is a Ziegler-Natta catalyst containing 2.4 wt% titanium and a succinate compound as internal donor.

The propylene polymers produced in the polymerization pilot plant were additivated with a sufficient amount of antioxidants and acid scavengers to reduce their degradation during further processing. The additivated propylene polymers were pelletized using a melt extruder.

The melt flow index (MFI) was measured according to ISO 1133, condition L, at 230°C with a load of 2.16 kg.

Xylene solubles (XS) were determined as follows: Between 4.5 and 5.5 g of propylene polymer were weighed into a flask and 300 ml xylene were added. The xylene was heated under stirring to reflux for 45 minutes. Stirring was continued for 15 minutes exactly without heating. The flask was then placed in a thermostated bath set to 25°C +/- 1°C for 1 hour. The solution was filtered through Whatman n° 4 filter paper and exactly 100 ml of solvent were collected. The solvent was then evaporated and the residue dried and weighed. The percentage of xylene solubles ("XS") was then calculated according to

$$\text{XS (in wt\%)} = (\text{Weight of the residue} / \text{Initial total weight of PP}) * 300$$

The aluminium, magnesium and titanium contents of the propylene polymer were determined by an inductively coupled plasma technique with atomic emission spectroscopy using a polymer sample of 10 g. The aluminium, magnesium of titanium contents ("Al", "Mg" or "Ti" in table 2) are given in ppm based on the total weight of the propylene polymer.

Total ash content is measured as follows: 10 g of a PP sample is charred in a platinum crucible till total carbon disappearance. After cooling, the crucible is weighted and the amount of ash determined by difference and reported to 10 g. Ash content is expressed in ppm.

Chlorine content in PP is determined on a 10 g sample by a calibrated WD-XRF method. It is given in ppm.

Molecular weight distribution is determined by Size Exclusion Chromatography (SEC) at high temperature (145°C). A 10 mg PP sample is dissolved at 160°C in 10 ml of TCB (technical grade) for 1 hour. The analytical conditions for the Alliance GPCV 2000 from WATERS are :

- Volume : +/- 400μl
- Injector temperature : 140°C
- Column and detector: 145°C
- Column set: 2 Shodex AT-806MS and 1 Styragel HT6E
- Flow rate 1ml/min
- Detector: Refractive index
- Calibration : Narrow standards of polystyrene
- Calculation : Based on Mark-Houwink relation ($\log(M_{PP}) = \log(M_{PS}) - 0.25323$)

The polymer index (PI) is given as PI = $10^5$ Pa · $G_c^{-1}$. $G_c$ is the cross-over modulus in Pascal determined at 230°C using a dynamic rheometer in frequency sweep with a strain of 20% on an ARES from Tainstrument, branch of WATERS.

The isotacticity (mmmm %) is determined by NMR analysis according to the method described by G.J. Ray et al. in Macromolecules, vol. 10, n° 4, 1977, p. 773-778. It is performed on the dried product resulting of the extraction by boiling heptane of the xylene insoluble PP fraction.

Example 1 and comparative examples 1 and 2

Example 1 and comparative examples 1 and 2, i.e. below and above the Al/Ti ratio required by the present invention, were produced with Avant ZN168. Polymerization conditions are indicated in table 1, with catalyst productivity given in g of propylene polymer per g catalyst. For the production of example 1 and comparative examples 1 and 2 the polymerization pilot plant was run in such a way that the melt flow indices of the propylene polymers produced in the two loop reactors were the same within error of measurement, i.e. the molecular weight distribution of the propylene polymer recovered after the second polymerization reactor had a monomodal molecular weight distribution. The properties of the propylene polymers are given in table 2.

Table 1

| | Unit | Comp. ex. 1 | Comp. ex. 2 | Example 1 |
|---|---|---|---|---|
| Catalyst | Unit | ZN168 | ZN168 | ZN 168 |
| External Donor (ED) | | D donor | D donor | D donor |
| Reactor pressure | bar | 42 | 42 | 42 |
| Prepolymerization | | | | |
| Temperature | °C | 10 | 10 | 10 |
| Propylene | kg/h | 30 | 30 | 30 |
| TEAL/Propylene | g/kg | 0.15 | 0.07 | 0.03 |
| TEAL/ED | g/g | 95 | 106 | 85 |
| Loop 1 | | | | |
| Temperature | °C | 75 | 75 | 75 |
| Propylene | kg/h | 65 | 65 | 65 |
| Hydrogen | NL | 55 | 55.0 | 60.0 |
| Production Loop1 | kg/h | 31.4 | 28.8 | 28.9 |
| Residence Time | min | 46 | 45 | 45 |
| Contribution Loop1 | % | 62.5 | 64.9 | 65.4 |
| MFI | g/10’ | 3.1 | 2.8 | 3.0 |
| Loop 2 | | | | |
| Temperature | °C | 75 | 75 | 75 |
| Propylene | kg/h | 50 | 50 | 50 |
| Hydrogen | NL | 35.0 | 35.0 | 38.0 |
| Residence Time | min | 29 | 29 | 29 |
| Total production | kg/h | 50.1 | 44.8 | 45.9 |
| Catalyst productivity | gPP/g cata | 33200 | 30800 | 31400 |
| Al/Ti (molar ratio) | | 165 | 74 | 32 |
| Al/ED (molar ratio) | | 190 | 213 | 170 |

Table 2

| | Unit | Comp. ex. 1 | Comp. ex. 2 | Example 1 |
|---|---|---|---|---|
| Propylene Polymer | | | | |
| MFI fluff | g/10’ | 3.2 | 2.9 | 2.9 |
| Xs | wt% | 3.8 | 4.1 | 4.2 |
| PI | | 9.2 | 8.3 | 8.5 |
| mmmm | % | 97.6 | 97.8 | 97.6 |
| Al (calculated) | ppm | 67 | 33 | 15 |
| Al (measured) | ppm | 52 | 27 | 13 |
| Mg (measured) | ppm | 4.6 | 4.8 | 4.7 |
| Ti (measured) | ppm | 0.6 | 0.7 | 0.7 |

(continued)

| | Unit | Comp. ex. 1 | Comp. ex. 2 | Example 1 |
|---|---|---|---|---|
| Cl (measured) | ppm | 12.0 | 13.0 | 12.0 |

## Claims

1. Process for the production of propylene polymers having a broad molecular weight distribution and a low ash content by polymerization of propylene and one or more optional comonomers in presence of

(a) a Ziegler-Natta catalyst comprising a titanium compound having at least one titanium-halogen bond, and an internal electron donor, both supported on a magnesium halide in active form,
(b) triethyl aluminium, and
(c) an optional external electron donor (ED),

wherein the internal donor comprises at least 80 wt% of a compound selected from the group consisting of succinates, di-ketones and enamino-imines; wherein the molar ratio Al/Ti is at most 40; and wherein the propylene polymers are recovered from the polymerization reactor, without any washing, as a powder and optionally converted to pellets.

2. Process according to claim 1, wherein the internal donor comprises at least 80 wt%, preferably at least 90 wt%, more preferably at least 95 wt% and even more preferably at least 99 wt% of a compound selected from the group consisting of succinates, di-ketones and enamino-imines.

3. Process according to any of the preceding claims, wherein the internal donor is a succinate.

4. Process according to any of the preceding claims, wherein the internal donor essentially consists of a succinate.

5. Process according to any of the preceding claims, wherein the molar ratio Al/Ti is in the range from 10 to 40, preferably in the range from 10 to 35.

6. Process according to any of the preceding claims, wherein an external electron donor (ED) is present.

7. Process according to claim 6, wherein the molar ratio Al/ED is at most 250.

8. Process according to claim 6 or claim 7, wherein the molar ratio Al/ED is in the range from 5 to 200.

9. Process according to any of claims 6 to 8, wherein the external electron donor (ED) comprises a silane.

10. Propylene polymer made according to the process of claims 1 to 9.

11. Propylene polymer according to claim 10, having a polydispersity index (PI) in the range from 6 to 9.

12. Propylene polymer according to claim 10 or claim 11, comprising at most 15 ppm of chlorine, preferably at most 12 ppm.

13. Propylene polymer according to claim 10 to 12, comprising at most 5 ppm of magnesium.

14. Propylene polymer according to any of claims 10 to 13 comprising at most 30 ppm of aluminium, preferably at most 25 ppm, more preferably at most 20 ppm and most preferably at most 15 ppm.

15. Propylene polymer according to any of claims 10 to 14 comprising at most 2 ppm of titanium, preferably at most 1.5 ppm, more preferably at most 1.25 ppm and most preferably at most 1 ppm.

16. Propylene polymer according to any of claims 10 to 15 comprising a total ash content of at most 60 ppm, preferably of at most 55 ppm, more preferably of at most 50 ppm and most preferably of at most 45 ppm.

17. Propylene polymer according to any of claims 10 to 16 having a xylene solubles content in the range from 2.0 wt%

to 5.0 wt%.

**18.** Film made with the propylene polymer of any of claims 10 to 17.

**19.** Film according to claim 18, wherein the propylene polymer is a homopolymer.

**20.** Film according to claim 18 or claim 19, wherein the propylene polymer has a melt flow index (ISO 1133, condition L) in the range from 1 dg/min to 10 dg/min, more preferably in the range from 1 dg/min to 4 dg/min, and most preferably in the range from 1.5 dg/min to 4 dg/min.

**21.** Fiber or nonwoven made with the propylene polymer of any of claims 10 to 17.

**22.** Fiber or nonwoven according to claim 21, wherein the propylene polymer is a homopolymer.

**23.** Fiber or nonwoven according to claim 21 or claim 22, wherein the propylene polymer has a melt flow index (ISO 1133, condition L, 230°C, 2.16 kg) in the range from 5 dg/min to 2000 dg/min.

**24.** Use of the film of claims 18 to 20 as capacitor film.

**25.** Use of the film of claims 18 to 20 in packaging applications.

**26.** Use of the fiber or nonwoven of claims 21 to 23 in hygiene applications.

European Patent Office

# EUROPEAN SEARCH REPORT

Application Number
EP 07 15 0038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/122240 A (TOTAL PETROCHEMICALS RES FELUY [BE]; STANDAERT ALAIN [BE]; GROMADA JER) 1 November 2007 (2007-11-01) | 10-26 | INV. C08F10/06 C08F4/651 |
| X | * claims 1,7-20 * | 10, 12-22, 25,26 | |
| X | * page 10, line 26 - line 29 * | 24 | |
| X | * page 11, line 9 - line 16 * | 26 | |
| X | * page 5, line 2 - line 4 * | 23 | |
| Y | * claim 1 * ----- | 1-9 | |
| X | US 5 529 850 A (MORINI GIAMPIERO [IT] ET AL) 25 June 1996 (1996-06-25) * example 1 * * column 12, line 10 - line 24 * ----- | 10,12, 15,17-23 | |
| D,X | EP 0 449 302 A (HIMONT INC [US]) 2 October 1991 (1991-10-02) * examples 1,2; table 1 * ----- | 10,12-16 | |
| Y | WO 01/57099 A (BASELL TECHNOLOGY CO BV [NL]; MORINI GIAMPIERO [IT]; BALBONTIN GIULIO) 9 August 2001 (2001-08-09) * claims 1,10 * * page 9 - page 10 * ----- | 1-9 | TECHNICAL FIELDS SEARCHED (IPC): C08F |
| Y | EP 0 646 605 A (HIMONT INC [US] MONTELL NORTH AMERICA INC [US]) 5 April 1995 (1995-04-05) * page 10 * ----- | 1-6 | |

The present search report has been drawn up for all claims

| Place of search | Date of completion of the search | Examiner |
|---|---|---|
| The Hague | 9 September 2008 | Fischer, Brigitte |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..............................
& : member of the same patent family, corresponding document

4
EPO FORM 1503 03.82 (P04C01)

## ANNEX TO THE EUROPEAN SEARCH REPORT ON EUROPEAN PATENT APPLICATION NO. EP 07 15 0038

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2008

| Patent document cited in search report | Publication date | Patent family member(s) | Publication date |
|---|---|---|---|
| WO 2007122240 A | 01-11-2007 | NONE | |
| US 5529850 A | 25-06-1996 | NONE | |
| EP 0449302 A | 02-10-1991 | AU 635624 B2 | 25-03-1993 |
| | | AU 7386591 A | 03-10-1991 |
| | | BR 9101278 A | 05-11-1991 |
| | | CA 2039444 A1 | 01-10-1991 |
| | | CN 1055934 A | 06-11-1991 |
| | | CS 9100879 A2 | 12-11-1991 |
| | | FI 911506 A | 01-10-1991 |
| | | HU 57801 A2 | 30-12-1991 |
| | | IT 1241094 B | 29-12-1993 |
| | | MX 25157 A | 01-12-1993 |
| | | NO 911239 A | 01-10-1991 |
| | | PT 97209 A | 29-11-1991 |
| | | US 5557025 A | 17-09-1996 |
| | | ZA 9102284 A | 24-12-1991 |
| WO 0157099 A | 09-08-2001 | AU 2849701 A | 14-08-2001 |
| | | DE 60104238 D1 | 19-08-2004 |
| | | DE 60104238 T2 | 28-07-2005 |
| | | ES 2223887 T3 | 01-03-2005 |
| | | JP 2003522231 T | 22-07-2003 |
| | | US 2002183575 A1 | 05-12-2002 |
| EP 0646605 A | 05-04-1995 | AT 180793 T | 15-06-1999 |
| | | AU 677422 B2 | 24-04-1997 |
| | | AU 7435094 A | 13-04-1995 |
| | | BR 9403967 A | 27-06-1995 |
| | | CA 2133352 A1 | 02-04-1995 |
| | | CN 1105671 A | 26-07-1995 |
| | | CN 1257061 A | 21-06-2000 |
| | | DE 69418808 D1 | 08-07-1999 |
| | | DE 69418808 T2 | 07-10-1999 |
| | | DK 646605 T3 | 23-06-1999 |
| | | ES 2133459 T3 | 16-09-1999 |
| | | FI 944573 A | 02-04-1995 |
| | | IT MI932102 A1 | 03-04-1995 |
| | | JP 3688308 B2 | 24-08-2005 |
| | | JP 7233209 A | 05-09-1995 |
| | | JP 3847768 B2 | 22-11-2006 |
| | | JP 2005226076 A | 25-08-2005 |
| | | US 5468704 A | 21-11-1995 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0449302 A
- EP 0361493 A
- EP 0728769 A


### Non-patent literature cited in the description


- **ZEICHNER ; PATEL.** *Proceedings of the 2nd World Congress of Chemical Engineering,* 1981, vol. 6, 373
- **G.J. RAY et al.** *Macromolecules,* 1977, vol. 10 (4), 773-778
- Plastics Additives Handbook. Hanser Publishers, 2001